# EUROPÄISCHE PATENTSCHRIFT

(11) **EP 4 474 068 B1**
(45) Veröffentlichungstag und Bekanntmachung des Hinweises auf die Patenterteilung: **07.05.2025**
(21) Anmeldenummer: 23178529.6
(22) Anmeldetag: 09.06.2023
(51) Int. Cl.: B09B 3/30, B03B 9/06, B09B 3/35, B09B 101/90, B09B 101/45, B09B 101/35

(54) **SANIERUNG UND AUFBEREITUNG VON ASBESTHALTIGEM ABBRUCHMATERIAL**
REMEDIATION AND RECONDITIONING OF ASBESTOS CONTAINING DEMOLITION MATERIAL
TRAITEMENT ET RESTAURATION DE MATÉRIAU DE DÉMOLITION CONTENANT DE L'AMIANTE

(43) Veröffentlichungstag der Anmeldung: 11.12.2024
(73) Patentinhaber: Böhm, Uta Therese, 56271 Isenburg (DE); Herrmann, Bastian Ulrich, 67141 Neuhofen (DE); Oehm, Peter Matthias, 55268 Nieder-Olm (DE)
(72) Erfinder: Böhm, Uta Therese, 56271 Isenburg (DE); Herrmann, Bastian Ulrich, 67141 Neuhofen (DE); Oehm, Peter Matthias, 55268 Nieder-Olm (DE)
(74) Vertreter: Bosch Jehle Patentanwaltsgesellschaft mbH

(56) Entgegenhaltungen:
- KR-B1- 100 874 665
- US-A1- 2022 048 041
- MUELLER A ET AL: "AUFBEREITUNG UND VERWERTUNG VON BAUABFAELLEN", ENTSORGUNGS PRAXIS, BERTERSMANN FACHZEITSCHRIFTEN GMBH, DE, vol. 18, no. 10, 1 October 2000 (2000-10-01), pages 13 - 16/17, XP000969412, ISSN: 0724-6870

## Beschreibung

Die Erfindung betrifft ein Verfahren und ein System zur Sanierung und Aufbereitung von Abbruchmaterial, das mineralische und asbesthaltige Bestandteile enthält.

Im 20. Jahrhundert war Asbest aufgrund seiner besonderen Eigenschaften (große Festigkeit, hohe Hitze- und Säurebeständigkeit sowie hervorragende Wärmedämmung) ein beliebter Baustoff und wurde vielseitig eingesetzt. Asbesthaltige Baumaterialien wie Asbestzement waren weit verbreitet. Für Asbestzement wurden Asbestfasern mit Zement gemischt, um z.B. Asbestzementplatten, -rohre, -schindeln und -wellplatten herzustellen. Asbest kam aber auch in Putz, Spachtelmasse und Fliesenkleber zum Einsatz. In der Betonindustrie wurden insbesondere asbesthaltige Abstandshalter (aus Faserzement) verwendet. Sie hatten die Funktion, den Abstand zwischen den Bewehrungsstäben (Stahlstäben) im Beton und der Schalung zu gewährleisten.

Wegen der erheblichen Gesundheitsgefahr wurde die Verwendung von Asbest jedoch stark eingeschränkt. Am 1. November 1993 wurde in Deutschland schließlich ein Herstellungs- und Verwendungsverbot für Asbest erlassen. Asbesthaltige Materialien (inkl. Material mit Asbestanhaftungen) müssen außerdem sach- und fachgerecht auf einer Deponie beseitigt werden. Die genauen Vorgehensweisen und Bestimmungen zur Asbestentsorgung unterliegen strengen Auflagen und können je nach Land oder Region unterschiedlich sein. Bei Bauwerkssanierungen oder -abriss werden asbesthaltige Materialien in der Regel vor Ort in einem sog. Schwarzbereich staubdicht (in sogenannten "Big Bags") verpackt, die Verpackungsmaterialien faserfrei gemacht und auf einer Deponie eingelagert. Eine Verwertung bzw. Aufbereitung von asbesthaltigem Material ist bisher nicht vorgesehen.

Aus dem Dokument MUELLER A ET AL: "AUFBEREITUNG UND VERWERTUNG VON BAUABFAELLEN'', ENTSORGUNGS PRAXIS, BERTERSMANN FACHZEITSCHRIFTEN GMBH, DE, Bd. 18, Nr. 10, 1.Oktober 2000 (2000-10-01), Seiten 13-16/17, XP000969412, ISSN: 0724-6870 ist ein Verfahren und ein System zur Aufbereitung und Verwertung von Bauabfällen bekannt.

Außerdem betrifft das koreanische Patent KR 100 874 665 B1 ein Verfahren zur Wiederverwertung von Bauabfällen, insbesondere zur Herstellung von wiederverwertetem Gesteinskörnungsmaterial.

Der Erfindung liegt daher die technische Aufgabe zugrunde, eine Sanierung und Aufbereitung von asbesthaltigem Abbruchmaterial bereitzustellen, die eine effiziente Trennung von asbesthaltigem und nicht-asbesthaltigem Material ermöglicht.

Diese Aufgabe wird durch das erfindungsgemäße Verfahren gemäß Anspruch 1 und das erfindungsgemäße System gemäß Anspruch 14 gelöst. Vorteilhafte Ausgestaltungen der vorliegenden Erfindung sind in den Unteransprüchen 2 bis 13 und 15 angegeben.

Die Erfindung betrifft ein Verfahren zur Sanierung und Aufbereitung von Abbruchmaterial, das mineralische und asbesthaltige Bestandteile enthält, gemäß Anspruch 1.

Als Abbruchmaterial werden das beim Abriss oder der Sanierung von Bauwerken, wie z.B. von Häusern und Brücken, anfallende Material, aber auch Baureststoffe angesehen, die mineralische Baustoffe und Asbest enthalten. Typische in Bauwerken verwendete mineralische Baustoffe sind z.B. Beton, Gips, Kalksandstein, Zement und Ziegel. Diesen Baustoffen wurde in der Vergangenheit je nach Anwendung Asbest beigemischt oder sie wurden mit Asbest verkleidet. Das Abbruchmaterial liegt bevorzugt in Bruchstücken vor, die eine maximale Kantenlänge von 80 cm, bevorzugt 40 cm, aufweisen. Hierzu wird vorzugsweise das Abbruchmaterial (vorbereitend) zerkleinert bzw. pulverisiert. Typischerweise kommen für die Zerkleinerung des Abbruchmaterials Bagger mit zangenähnlichen Anbauteilen (Pulverisierer) zum Einsatz, die das Material zwischen zwei Brechbacken zerlegen. Dies ist von Vorteil, denn das zerkleinerte Abbruchmaterial lässt sich mithilfe eines Radladers und/oder einem Förderband einfach transportieren.

In dem ersten Verfahrensschritt wird das Abbruchmaterial aufgebrochen (Brechgut), um die mineralischen und asbesthaltigen Bestandteile jeweils zu zerteilen, so dass eine ausreichende Trennung von nicht-asbesthaltigen mineralischen Bestandteilen und asbesthaltigen mineralischen Bestandteilen erzielt wird. Es ist von Vorteil die nicht-asbesthaltigen mineralischen und asbesthaltigen mineralischen Bestandteile in möglichst kleine Bruchstücke zu zerlegen, um einen hohen Grad der Extraktion von Asbest aus dem Abbruchmaterial zu erreichen. Das Aufbrechen des Abbruchmaterials kann mit einem Brechgerät, bevorzugt mit einem (mobilen) Prallmühlenbrecher oder Backenbrecher, erfolgen.

Vorzugsweise werden nach dem Aufbrechen des Abbruchmaterials magnetische Bestandteile aus dem aufgebrochenen Abbruchmaterial magnetisch abgetrennt. Hierfür kann ein magnetischer Abscheider verwendet werden, um z.B. Metallteile aus dem aufgebrochenen Abbruchmaterial effizient zu entfernen.

Im Anschluss an das Aufbrechen des Abbruchmaterials und dem optionalen Schritt des magnetischen Abtrennens wird das aufgebrochene Material trocken- oder nassklassiert. Beim Klassieren handelt es sich um eine mechanische Größentrennung von schüttfähigem Aufgabegut (des aufgebrochenen Abbruchmaterials / Brechguts). In Abhängigkeit der geltenden Umweltauflagen kann das Klassieren ohne den Einsatz einer Flüssigkeit (Trockenklassieren) oder befeuchtet, meist mit Wasser, (Nassklassieren) erfolgen. Beim Trockenklassieren kommt ein Klassiergerät, wie eine Siebmaschine, zur Anwendung, das in Abhängigkeit von den gewünschten Trennkriterien, z.B. je nach Anzahl der Siebebenen mit vorbestimmter Siebmaschenweite bzw. Lochgröße, das Aufgabegut der Korngrößenverteilung nach in mindestens eine Feinfraktion mit kleiner Korngröße und eine Mittelfraktion mit mittlerer Korngröße auftrennt. Beim Nassklassieren wird das Brechgut befeuchtet und, z.B. mithilfe einer Siebmaschine, nach Korngröße getrennt.

Sollten im aufgebrochenen Abbruchmaterial zu große Bestandteile verblieben sein, kann eine weitere Siebebene vorgeschaltet werden, um eine Grobfraktion mit großer Korngröße abzutrennen. Das Trocken- oder Nassklassieren hat den besonderen Vorteil, dass die so erhaltenen Fraktionen jeweils einer spezifischen Weiterbehandlung zugeführt werden können, die auf die einzelnen Korngrößen abgestimmt ist. Das heißt, die Feinfraktion kann einer anderen, angepassten Weiterbehandlung zugeführt werden als die Mittelfraktion (oder die Grobfraktion).

Bevorzugt wird im Schritt des Trocken- oder Nassklassierens das aufgebrochene Abbruchmaterial zusätzlich in eine Grobfraktion getrennt. Damit kann die Grobfraktion einer weiteren Zerkleinerung, insbesondere mit weiterem Abbruchmaterial, unterzogen werden. Ein Abtrennen einer Grobfraktion ist dann sinnvoll, wenn eine bestimmte maximale Korngröße im aufgebrochenen Abbruchmaterial überschritten wird. Denn je nach Wahl des Brechgeräts kann die Korngrößenverteilung nach einer Zerkleinerung (einem Aufbrechvorgang) recht breit ausfallen. Kommen als Brechgerät z.B. Prallmühlenbrecher zum Einsatz, ist damit zu rechnen, dass nach einer ersten Zerkleinerung grobe Bestandteile erhalten bleiben und erst nach einer weiteren Zerkleinerung durch den Prallmühlenbrecher die gewünschte Korngröße erreichen. Der vorgenannte Schritt des Aufbrechens kann daher mit einer Rückführungsschleife ergänzt werden, d.h. in einem weiteren Schritt kommt es zum Aufbrechen der Grobfraktion, um die in der Grobfraktion enthaltenen mineralischen und asbesthaltigen Bestandteile weiter zu zerteilen. Ganz konkret wird die erhaltene Grobfraktion also z.B. in den Prallmühlenbrecher zurückgeführt und so in kleinere Bruchstücke gebrochen. Vorzugsweise wird die Grobfraktion zusammen mit weiterem Abbruchmaterial aufgebrochen.

Vorzugsweise weist die Mittelfraktion eine Korngröße von mehr als 0 mm und bis zu 32 mm, bevorzugt von 2 mm bis 8 mm, auf. Bei der Feinfraktion handelt es sich typischerweise um (asbesthaltige) Betonsande und/oder Stäube mit einer Korngröße von z.B. weniger als 2 mm. Die Grobfraktion besteht z.B. aus aufgebrochenem Abbruchmaterial mit einer Korngröße von mehr als 32 mm, bevorzugt von mehr als 8 mm.

Erfindungsgemäß wird die Mittelfraktion nasssortiert, d.h. die Bestandteile des aufgebrochenen Abbruchmaterials mit mittlerer Korngröße werden in einer strömenden Flüssigkeit aufgrund unterschiedlicher Absinkgeschwindigkeiten oder Bewegungsbahnen - bedingt durch die unterschiedlichen Dichten der Bestandteile - aufgetrennt. Durch geeignete Wahl der Flüssigkeit, meist Wasser, kann ferner erreicht werden, dass bestimmte Bestandteile im aufgebrochenen Abbruchmaterial aufschwimmen und andere aufgrund ihrer höheren Dichte absinken. Dieser Umstand ermöglicht es, die Bestandteile unterschiedlicher Dichte besonders leicht voneinander räumlich zu trennen. Im Ergebnis lässt sich so eine Fraktionierung in eine asbestfreie mineralische Fraktion, eine asbesthaltige (mineralische) Fraktion und am Boden abgesetzten (asbesthaltigen) Schlamm erhalten. Je nach Zusammensetzung des Abbruchmaterials stellt die asbestfreie mineralische Fraktion die Leichtfraktion und die asbesthaltige Fraktion die Schwerfraktion oder umgekehrt dar.

Denn grundsätzlich hat Asbest bzw. das Asbestmineral (z.B. Krokydolith ca. 3,2-3,4 g/cm³) eine höhere Dichte als mineralische Baustoffe, wie z.B. Beton. Asbestzement hingegen hat aufgrund von Zuschlagsstoffen, die eine geringe Dichte aufweisen, eine insgesamt geringere Dichte als Beton. Im Ergebnis verhält es sich bei asbesthaltigem Abbruchmaterial (aus z.B. Asbestzement und Beton) dann so, dass die asbesthaltige Fraktion weniger absinkt (Leichtfraktion) als die asbestfreie mineralische Fraktion (Schwerfraktion). Bei anderen Betonmischungen kann sich das Dichteverhältnis Asbestzement zu Beton umkehren, so dass der Beton die Leichtfraktion und der Asbestzement die Schwerfraktion darstellt.

Es ist ferner zweckmäßig, wenn das Nasssortieren mithilfe eines Aufstromverfahrens oder Hub-Senkverfahrens erfolgt. Bei beiden Verfahren wird auf unterschiedliche Art und Weise eine nach oben gerichtete Strömung in einer Flüssigkeit erzeugt. Mittels dieser Strömung erfolgt eine Dichtetrennung der Mittelfraktion. Für das Aufstromverfahren kann ein in der Flüssigkeit befindlicher antreibbarer Propeller und für das Hub-Senkverfahren eine auf- und absinkende Platte die gewünschte Strömung erzeugen, so dass Materialien niedrigerer Dichte (Leichtfraktion) durch die Strömung erfasst und an die Oberfläche der Flüssigkeit befördert werden, während Materialien höherer Dichte (Schwerfraktion) absinken. Durch Einstellmöglichkeiten bezüglich der Drehgeschwindigkeit des Propellers im Aufstromverfahren kann die Strömungsgeschwindigkeit den jeweiligen Anforderungen entsprechend angepasst werden.

Optional werden die Feinfraktion und/oder der asbesthaltige Schlamm hydraulisch gebunden. Unter dem hydraulischen Binden wird die Immobilisierung der Asbestfasern unter Zugabe eines hydraulischen Bindemittels (z.B. eine Zementsuspension), das in der Flüssigkeit/im Wasser erhärtet und so den Asbest bindet. Im gebundenen Zustand ist die Möglichkeit der Freisetzung von Asbestfasern weitgehend ausgeschlossen.

Bevorzugt ist ein weiterer Verfahrensschritt vorgesehen, in dem die Feinfraktion und/oder der asbesthaltige Schlamm gemäß einem Schwimm-/Sink-Verfahren sortiert werden, um die Feinfraktion und/oder den asbesthaltigen Schlamm in einen asbestfreien mineralischen Teil und einen asbesthaltigen mineralischen Teil zu trennen. Bei dem genannten Schwimm-/Sink-Verfahren kann/können die Feinfraktion und/oder der asbesthaltige Schlamm in eine Flüssigkeit gegeben werden, wobei die Dichte der Flüssigkeit so gewählt ist, dass sich der asbestfreie mineralische Teil von dem asbesthaltigen Teil trennt. Die Dichte der Flüssigkeit liegt beispielweise zwischen der Dichte des asbestfreien mineralischen Teils und der Dichte des asbesthaltigen Teils. In diesem Verfahrensschritt lassen sich somit die feinsten astbestfreien mineralischen Bestandteile des aufgebrochenen Abbruchmaterials vom (feinen) asbesthaltigen Teil abtrennen. Lediglich beispielhaft enthält die Flüssigkeit lodethan C₂H₅I oder Dichlorethan C₂H₄Cl₂. Vorzugsweise wird der asbesthaltige Teil anschließend hydraulisch gebunden.

Ein weiterer Aspekt der Erfindung betrifft ein System zur Sanierung und Aufbereitung von Abbruchmaterial, das mineralische und asbesthaltige Bestandteile enthält. Das System gemäß Anspruch 14 umfasst:
- ein Brechgerät, das dazu ausgebildet ist, das Abbruchmaterial aufzubrechen, um die mineralischen und asbesthaltigen Bestandteile zu zerteilen;
- ein dem Brechgerät nachgeschaltetes Klassiergerät, das dazu ausgebildet ist, das aufgebrochene Abbruchmaterial trocken oder nass zu klassieren, um dieses mindestens in eine Feinfraktion und eine Mittelfraktion zu trennen;
- ein dem Klassiergerät nachgeschaltetes Sortiergerät, das dazu ausgebildet ist, die Mittelfraktion mithilfe eines Nassstroms zu sortieren, um die Mittelfraktion in eine Schwerfraktion, eine Leichtfraktion und asbesthaltigen Schlamm zu trennen,
wobei entweder die Schwerfraktion asbestfrei mineralisch und die Leichtfraktion asbesthaltig oder die Schwerfraktion asbesthaltig und Leichtfraktion asbestfrei mineralisch sind.

Als Brechgerät ist vorzugweise ein (mobiler) Prallmühlen- oder Backenbrecher vorgesehen. Allgemein sind jedoch auch andere Brechgeräte geeignet, die (vorzerkleinertes) Abbruchmaterial zuverlässig auf eine gewünschte Korngröße reduzieren können.

Bei dem Klassiergerät handelt es sich bevorzugt um eine (mobile) Siebmaschine (bzw. einen (mobilen) Siebturm). Die Siebmaschine kann mehrere Siebdecks mit je einem Siebgewebe (oder einer Lochplatte) und einer vorbestimmten Maschenweite (oder Lochgröße) haben, um die gewünschten Fraktionen zu trennen.

Das Sortiergerät ist bevorzugt so ausgebildet, dass mithilfe einer Aufwärtsströmung (von z.B. Wasser) Leichtstoffe von Schwerstoffen getrennt werden können. Das Sortiergerät kann über eine mit einer Flüssigkeit (z.B. Wasser) gefüllte Trennkammer verfügen, in der eine Aufwärtsströmung, z.B. mittels eines Propellers, erzeugt wird. In der Trennkammer befindliche Leichtstoffe können so an die Oberfläche des Wassers transportiert werden, während Schwerstoffe absinken. Somit lässt sich eine Trennung in eine Leichtfraktion aus Leichtstoffen und eine Schwerfraktion aus Schwerstoffen erzielen. Je nach Zusammensetzung der Mittelfraktion (Zuschlagsstoffe, Asbestanteil) wird der asbesthaltige Bestandteil der Mittelfraktion als Leicht- oder Schwerfraktion abgetrennt.

Das System kann zusätzlich ein Auftriebbecken umfassen, das derart ausgebildet ist, eine Flüssigkeit aufzunehmen, um die Feinfraktion und/oder den asbesthaltigen Schlamm durch die Flüssigkeit zu leiten und so die Feinfraktion und/oder den asbesthaltigen Schlamm in einen asbestfreien mineralischen Teil und einen asbesthaltigen mineralischen Teil zu trennen.

Vorteile des erfindungsgemäßen Systems und dessen Ausführungsformen, sowie weitere vorteilhafte Ausführungsformen sind dem erfindungsgemäßen Verfahren, wie oben beschrieben, entsprechend zu entnehmen.

Durch die erfindungsgemäße Lösung wird es erstmals möglich, asbesthaltige und nicht-asbesthaltige Bestandteile aus Abbruchmaterial, insbesondere am Ort der Abrissstelle, zu trennen. So kann wertvolles Baumaterial zurückgewonnen und asbesthaltiger Bauabfall erheblich reduziert werden. Des Weiteren wird durch verkürzte Transportwege, sowie die Materialrückgewinnung CO₂ eingespart. Die Verminderung deponiepflichtiger Abfälle spart außerdem wertvollen Deponieraum.

Im Folgenden werden bevorzugte Ausführungsbeispiele der vorliegenden Erfindung anhand der nachfolgenden Figuren beschrieben. Es zeigen:
Fig. 1 ein Flussdiagramm, das ein Verfahren gemäß einer Ausführungsform der vorliegenden Erfindung veranschaulicht und
Fig. 2 eine schematische Darstellung einer Ausführungsform des erfindungsgemäßen Systems.

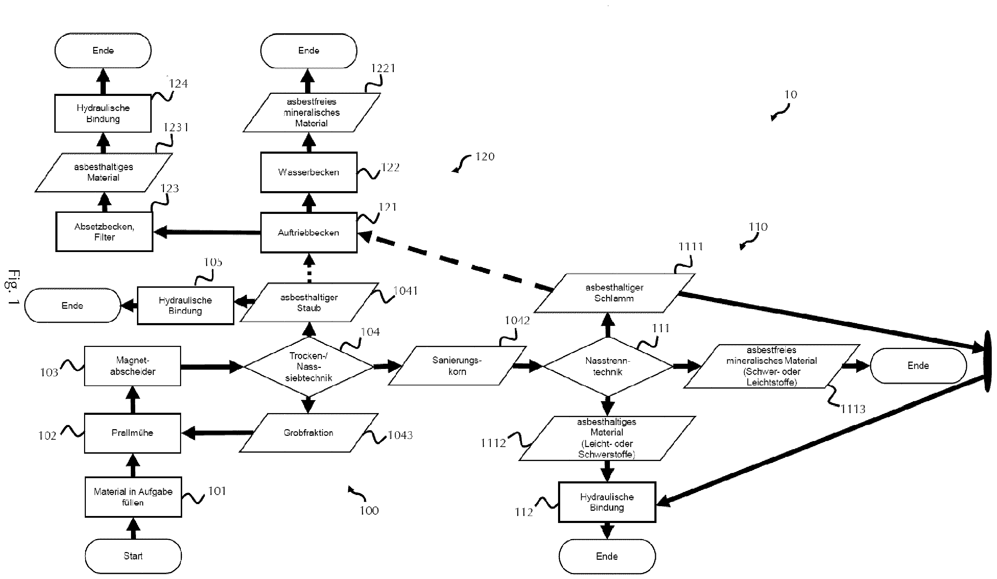

Fig.1 zeigt ein Flussdiagramm, das ein Verfahren 10 gemäß einer Ausführungsform der vorliegenden Erfindung veranschaulicht. Die gezeigten Verfahrensschritte sind lediglich beispielhaft in drei sogenannte "Sanierungsabschnitte" 100-120 unterteilt. Sanierungsabschnitte sind dadurch gekennzeichnet, dass in jedem Abschnitt das zugeführte Material in mehrere Fraktionen klassiert/sortiert wird. Sie unterliegen außerdem unterschiedlichen Sicherheitsbestimmungen. In Sanierungsabschnitten, in dem asbesthaltiges Material trocken transportiert und weiterverarbeitet wird, kann man Wasserkanonen einsetzen oder den betroffenen Arbeitsbereich abschirmen (sog. Schwarzbereich), wobei ein Unterdruck gegenüber der Umgebung (bei Verwendung entsprechender Luftfilter) dauerhaft aufrechterhalten wird, um die Ausbreitung von Asbestfasern zu verhindern. Sanierungsabschnitte, bei denen asbesthaltige Bestandteile in Flüssigkeiten gebunden sind, erfordern hingegen weniger strenge Sicherheitsvorkehrungen. Die mit einem gestrichelten Pfeil dargestellten Fließlinien stellen optionale Alternativen dar. Die konkreten Arbeits- und Umgebungsschutzmaßnahmen richten sich nach den jeweiligen Umweltauflagen.

In einem ersten Sanierungsabschnitt 100 wird das Abbruchmaterial aufgebrochen, um die mineralischen und asbesthaltigen Bestandteile zu zerteilen. Darüber hinaus erfolgt das Trocken- oder Nassklassieren des aufgebrochenen Abbruchmaterials, um dieses in eine Feinfraktion, Mittelfraktion und ggf. Grobfraktion zu trennen. Hierfür kommen ein Brechgerät (z.B. ein Prallmühlenbrecher), ein Magnetabscheider und ein Klassiergerät (z.B. Trocken-/Nasssiebtechnik) zum Einsatz.

Vorzerkleinertes bzw. pulverisiertes Abbruchmaterial, das asbesthaltige und mineralische Bestandteile enthält, kann mithilfe eines Radladers und z.B. über ein Förderband in die Aufgabe des Prallmühlenbrechers transportiert und gefüllt 101 werden. Der Prallmühlenbrecher bricht 102 das Abbruchmaterial auf eine gewünschte Korngröße (sog. Brechgut), um die mineralischen und asbesthaltigen Bestandteile zu zerteilen. Das mineralische asbesthaltige Brechgut wird sodann optional einem Magnetabscheider, der magnetische Bestandteile aufnimmt 103, und dann einer Trocken- bzw. Nasssiebtechnik zugeführt. Die Trocken- bzw. Nasssiebtechnik ist z.B. eine Siebmaschine, mit der das Brechgut trockenklassiert 104 (bzw. bei Zugabe von z.B. Wasser nassklassiert) wird. In der Trocken- bzw. Nasssiebtechnik wird das asbesthaltige mineralische Material in zumindest zwei verschiedene Korngrößen aufgeteilt und ausgegeben. Dies ist zerkleinertes Abbruchmaterial mit feiner Korngröße (Feinfraktion) 1041, z.B. kleiner als 2 mm, und mit mittlerer Korngröße (Mittelfraktion) 1042, z.B. zwischen 2 mm und 8 mm. Bei der Feinfraktion kann es sich um asbesthaltigen Stäube und Betonsand handeln.

Sollten grobe Bestandteile mit großer Korngröße, z.B. größer als 8 mm, nach Durchlaufen des Prallmühlenbrechers erhalten bleiben, ist es von Vorteil, wenn diese Bestandteile als Grobfraktion ausgesiebt 1043 und beispielsweise über ein Förderband dem Prallmühlenbrecher erneut zugeführt werden. Dieser Rückführungsvorgang wird so oft wiederholt bis das aufgebrochene Abbruchmaterial eine Korngröße erreicht, die unterhalb der vorbestimmten großen Korngröße liegt.

Die Mittelfraktion (Sanierungskornfraktion) gelangt beispielsweise über ein Förderband in einen zweiten Sanierungsabschnitt 110, die Feinfraktion (Betonsand, Stäube) z.B. über ein Förderband in einen dritten Sanierungsabschnitt 120. Der zweite und dritte Sanierungsabschnitt werden im Folgenden erläutert.

In dem zweiten Sanierungsabschnitt 110 wird die im ersten Sanierungsabschnitt 100 gewonnene Mittelfraktion 1042 (Sanierungskorn) nasssortiert, um diese in drei weitere Fraktionen zu trennen. Die drei weiteren Fraktionen aus der Mittelfraktion sind Partikel mit hoher Dichte, sogenannte Schwerstoffe, (Schwerfraktion) und Partikel mit geringer Dichte, sogenannte Leichtstoffe, (Leichtfraktion) sowie Schlamm 1111. Je nach Zusammensetzung der verwendeten asbesthaltigen Produkte akkumuliert der Asbest in der Leicht- oder Schwerfraktion 1112 und asbestfreies mineralisches Material in der Schwer- oder Leichtfraktion 1113. Bevorzugt wird für diesen Zweck eine Nasstrenntechnik verwendet. Denkbar ist eine Nasstrenntechnik, die auf Basis eines Aufstromverfahrens oder mithilfe von Hub- und Senktechnik funktioniert. Für welches Trennverfahren man sich schlussendlich entscheidet, hängt von vielen Faktoren ab, wie die Verarbeitungsmenge, räumliche Vorgaben, die Lieferzeit der technischen Anlagen, dem Fasergehalt im asbesthaltigen Abbruchmaterial und die Wirtschaftlichkeit.

Die asbesthaltige Fraktion (Leicht- oder Schwerfraktion) gelangt z.B. über ein Förderband in einen Bereich und wird hydraulisch gebunden 112. Die asbesthaltige Fraktion muss gemäß Behördenvorgabe verpackt und (z.B. auf einer entsprechenden Deponie) beseitigt werden. Die asbestfreie Fraktion wird z.B. mittels Förderband aus der Nasstrenntechnik transportiert und ist aus asbestfreiem mineralischem Material, welches dem Stoffkreislauf zugeführt werden kann.

Die Fraktion Schlamm kann alternativ dem dritten Sanierungsabschnitt 120 zugeführt werden. Sollte der dritte Sanierungsabschnitt 120 (z.B. je nach Menge oder aus wirtschaftlichen Gründen) für die weitere Aufbereitung dieser Fraktion nicht in Betracht kommen, so kann sie hydraulisch gebunden 105, bevorzugt in Big Bags verpackt und gemäß Behördenvorgabe (z.B. auf einer entsprechenden Deponie) beseitigt werden.

In dem dritten Sanierungsabschnitt 120 erfolgt das Sortieren der Feinfraktion und/oder des Schlamms gemäß einem Schwimm-/Sink-Verfahren, um die Feinfraktion und/oder den asbesthaltigen Schlamm in einen asbestfreien mineralischen Teil und einen asbesthaltigen Teil zu trennen. Für diesen Sanierungsabschnitt 120 können ein Auftriebbecken 121 und ein Wasserbecken 122 eingesetzt werden. Dabei werden in dem Auftriebbecken die Feinfraktion (Stäube, Betonsande) und/oder der asbesthaltige Schlamm durch Flüssigkeit geleitet und so asbesthaltiges mineralisches Material vom asbestfreien mineralischen Material abgetrennt 121. Die Dichte der Flüssigkeit ist hierbei abhängig von der Art und Weise der Asbestverwendung im Abbruchmaterial und kann zwischen den asbesthaltigen und den mineralischen asbestfreien Partikeln liegen. Das abgetrennte asbesthaltige Material kann ferner abgesetzt sowie gefiltert 123, ausgegeben 1231 und anschließend hydraulisch gebunden 124 werden. Für das Absetzen und Filtern des asbesthaltigen Materials ist beispielweise ein mit einer Flüssigkeit gefülltes Absetzbecken mit Filterkerze vorgesehen. Im Absetzbecken sinkt die schwere Fraktion zu Boden, die leichte Fraktion treibt an der Oberfläche der Flüssigkeit. Das Absetzbecken ist z.B. in Form eines Überlaufs konstruiert, wobei am Überlauf sich die Filterkerze befindet. An dieser wird die aufschwimmende Fraktion zurückgehalten. Die Flüssigkeit kann passieren. Je nach Zusammensetzung des asbesthaltigen Materials setzen sich asbesthaltige Bestandteile am Beckenboden oder in der Filterkerze ab. Abschließend können die asbesthaltigen Materialien hydraulisch gebunden 124 und vorzugsweise gemäß Behördenvorgabe (z.B. auf einer entsprechenden Deponie) entsorgt werden.

Der asbestfreie mineralische Teil der klassierten Feinfraktion und/oder des sortierten Schlamms kann anschließend zur Reinigung einem Wasserbecken zugeführt 122 und ausgeschleust 1221 werden. Der asbestfreie mineralische Teil steht nach der Reinigung dann wieder dem Stoffkreislauf zur Verfügung.

Die Schritte des dritten Sanierungsabschnitts 120 sind rein optional.

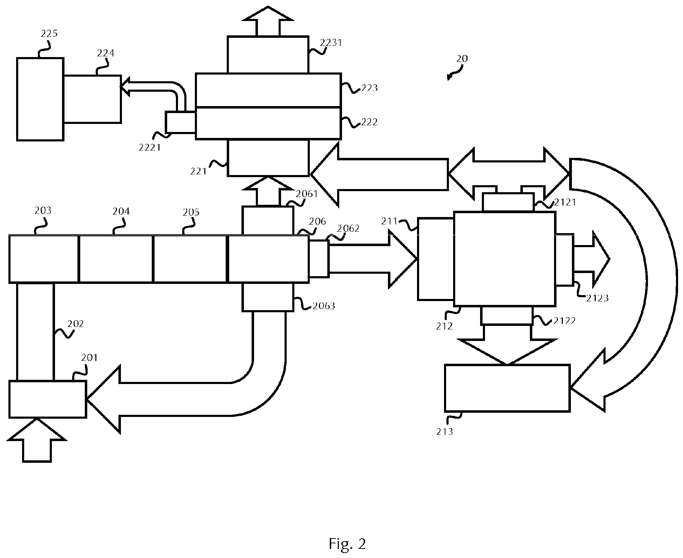

Fig. 2 zeigt eine Ausführungsform des erfindungsgemäßen Systems 20 und ist so ausgebildet, dass es das Verfahren gemäß Fig. 1 ausführen kann.

Das System 20 weist beispielsweise eine Materialaufgabe 201 zur Aufnahme von (vorzerkleinertem) Abbruchmaterial mit mineralischen und asbesthaltigen Bestandteilen auf. Von der Materialaufgabe 201 kann ein Förderband 202 zur Aufgabe 203 eines Brechgeräts 204, z.B. eines Prallmühlenbrechers, führen, um das Abbruchmaterial zu transportieren. Das Brechgerät 204 ist dazu ausgebildet, das Abbruchmaterial aufzubrechen, so dass die mineralischen und asbesthaltigen Bestandteile zerteilt werden. Für die Abscheidung von magnetischen Stoffen ist dem Brechgerät 204 vorzugweise ein Magnetabscheider 205 nachgeschaltet. Das System 20 weist ferner ein Klassiergerät 206 auf, wie Trocken-/Nasssiebtechnik. Mit dem Klassiergerät 206 wird aufgebrochenes Abbruchmaterial trocken- bzw. nassklassiert, um eine Feinfraktion (asbesthaltiger Staub, Betonand), eine Mittelfraktion (Sanierungskorn) und optional eine Grobfraktion zu erhalten. Die erhaltenen Fraktionen stehen dann beispielsweise in entsprechenden Ausgaben, der Ausgabe für die Feinfraktion 2061, die Mittelfraktion 2062 und Grobfraktion 2063, zur Verfügung. Zum Nasssortieren der Mittelfraktion ist ein Sortiergerät 212, z.B. Nasstrenntechnik, vorgesehen. Das Sortiergerät 212 weist z.B. eine Aufgabe 211 auf, in die die Mittelfraktion (Sanierungskorn) gefüllt werden kann, sowie eine Ausgabe 2123 für die gewonnenen asbestfreien mineralischen Stoffe (Schwer- oder Leichtfraktion), eine Ausgabe 2122 für die asbesthaltigen mineralischen Stoffe (Leicht- oder Schwerfraktion) und eine Ausgabe 2121 für asbesthaltigen Schlamm. Es kann zudem eine Station 213 zum hydraulischen Binden von asbesthaltigem Material vorgesehen sein. Sollte die von dem Klassiergerät 206 erhaltene Feinfraktion und/oder der vom Sortiergerät 212 erhaltene Schlamm weiter aufbereiten werden, kann das System 20 über ein Auftriebbecken 222 mit einer entsprechenden Aufgabe 221 verfügen. Im Auftriebbecken 222 werden die Feinfraktion und/oder der Schlamm durch Flüssigkeit geleitet und so asbesthaltiges Material vom asbestfreien mineralischen Material abgetrennt und in der Ausgabe 2221 ausgegeben. Dem Auftriebbecken 222 kann zudem ein Wasserbecken 223 nachgeschaltet sein, um asbestfreies mineralisches Material reinigen zu können. Das gereinigte Material steht dann z.B. in der Ausgabe 2231 des Wasserbeckens 223 zur Verfügung. Das im Auftriebbecken 222 gewonnene asbesthaltige Material lässt sich beispielsweise in einem Absetzbecken (mit Filterkerze) 224 sedimentieren oder filtern und anschließend extrahieren. In einer Station 225 kann dann das extrahierte asbesthaltige Material hydraulisch gebunden werden.

Es können Komponenten bzw. Anlagen teilweise ausgelassen, ersetzt oder hinzugefügt werden, die für die Sanierung und Aufbereitung von asbesthaltigem Abbruchmaterial dienlich sind.

### Liste der Bezugszeichen:

- 10: Verfahren zur Sanierung und Aufbereitung von Abbruchmaterial, das mineralische und asbesthaltige Bestandteile enthält;
- 100: Erster Sanierungsabschnitt;
- 101: Füllen von Abbruchmaterial in die Materialaufgabe;
- 102: Aufbrechen des Abbruchmaterials (z.B. durch einen Prallmühlenbrecher);
- 103: Magnetisches Abtrennen von magnetischen Bestandteilen aus dem aufgebrochenen asbesthaltigen Abbruchmaterial;
- 104: Trocken- oder Nassklassieren des aufgebrochenen asbesthaltigen Abbruchmaterials;
- 1041: Ausgeben von asbesthaltigem Staub, Betonsand (Feinfraktion);
- 1042: Ausgeben von asbesthaltigem Sanierungskorn (Mittelfraktion);
- 1043: Ausgeben einer asbesthaltigen Grobfraktion;
- 105: Hydraulisches Binden der asbesthaltigen Feinfraktion (Staub, Betonsand);
- 110: Zweiter Sanierungsabschnitt;
- 111: Nasssortieren der Mittelfraktion (z.B. durch Nassstromtechnik oder Hub Senktechnik);
- 1111: Ausgeben von asbesthaltigem Schlamm;
- 1112: Ausgeben von asbesthaltigem mineralischem Material (Leicht- oder Schwerfraktion);
- 1113: Ausgeben von asbestfreiem mineralischem Material (Schwer- oder Leichtfraktion);
- 112: Hydraulisches Binden von asbesthaltigem mineralischem Material (Leicht- oder Schwerfraktion);
- 120: Dritter Sanierungsabschnitt;
- 121: Abtrennen von asbesthaltigem Material vom asbestfreien mineralischen Material aus der Feinfraktion und/oder dem Schlamm;
- 122: Reinigen des separierten asbestfreien mineralischen Materials;
- 1221: Ausgeben von dem asbestfreien mineralischen Material;
- 123: Absetzen und Filtern von asbesthaltigem Material;
- 1231: Ausgeben des asbesthaltigen Materials;
- 124: Hydraulisches Binden des asbesthaltigen Materials;
- 20: System zur Sanierung und Aufbereitung von Abbruchmaterial;
- 201: Materialaufgabe;
- 202: Förderband;
- 203: Aufgabe des Brechgeräts;
- 204: Brechgerät, z.B. Prallmühlenbrechers;
- 205: Magnetabscheider;
- 206: Trocken-/Nasssiebtechnik / Klassiergerät;
- 2061: Ausgabe asbesthaltiger Staub / Betonsand (Feinfraktion);
- 2062: Ausgabe Sanierungskorn (Mittelfraktion);
- 2063: Ausgabe Grobfraktion;
- 211: Aufgabe der Nassdichtetrennung;
- 212;: Nassdichtetrenner / Sortiergerät;
- 2121: Ausgabe Schlamm;
- 2122: Ausgabe asbesthaltiges mineralisches Material (Leichtfraktion oder Schwerfraktion);
- 2123: Ausgabe asbestfreies mineralisches Material (Schwerfraktion oder Leichtfraktion);
- 213: Station zum hydraulischen Binden;
- 221: Aufgabe des Auftriebbeckens;
- 222: Auftriebbecken;
- 2221: Ausgabe des Auftriebbeckens;
- 223: Wasserbecken;
- 2231: Ausgabe asbestfreies mineralisches Material;
- 224: Absetzbecken mit Filterkerze;
- 225: Station zum hydraulischen Binden.

## Patentansprüche

1. Verfahren zur Sanierung und Aufbereitung von Abbruchmaterial, das mineralische und asbesthaltige Bestandteile enthält, wobei das Verfahren die folgenden Schritte aufweist:
- Aufbrechen (102) des Abbruchmaterials, um die mineralischen und asbesthaltigen Bestandteile zu zerteilen;
- Trocken- oder Nassklassieren (104) des aufgebrochenen Abbruchmaterials, um dieses mindestens in eine Feinfraktion und eine Mittelfraktion zu trennen,
**dadurch gekennzeichnet, dass**
das Verfahren den zusätzlichen Schritt aufweist:
- Nasssortieren (111) der Mittelfraktion, um diese in eine Schwerfraktion, eine Leichtfraktion und asbesthaltigen Schlamm zu trennen,
wobei im Schritt des Nasssortierens die Mittelfraktion in eine strömende Flüssigkeit gegeben wird, um mineralische und asbesthaltige Bestandteile der Mittelfraktion der Dichte nach zu trennen und so die Schwerfraktion, die Leichtfraktion und den asbesthaltigen Schlamm zu erhalten, und
wobei entweder die Schwerfraktion asbestfrei mineralisch und die Leichtfraktion asbesthaltig sind, wenn die Dichte der mineralischen Bestandteile der Mittelfraktion höher ist als die Dichte der asbesthaltigen Bestandteile der Mittelfraktion, oder die Schwerfraktion asbesthaltig und die Leichtfraktion asbestfrei mineralisch sind, wenn die Dichte der asbesthaltigen Bestandteile der Mittelfraktion höher ist als die Dichte der mineralischen Bestandteile der Mittelfraktion.

2. Verfahren gemäß Anspruch 1, wobei im Schritt des Trocken- oder Nassklassierens das aufgebrochene Abbruchmaterial zusätzlich in eine Grobfraktion getrennt wird.

3. Verfahren gemäß Anspruch 2, umfassend den weiteren Schritt:
- Aufbrechen der Grobfraktion, um die in der Grobfraktion enthaltenen mineralischen und asbesthaltigen Bestandteile weiter zu zerteilen.

4. Verfahren gemäß Anspruch 3, wobei die Grobfraktion zusammen mit weiterem Abbruchmaterial aufgebrochen wird.

5. Verfahren gemäß einem der Ansprüche 1 bis 4, umfassend den weiteren Schritt:
- Sortieren (121) der Feinfraktion und/oder des asbesthaltigen Schlamms gemäß einem Schwimm-/Sink-Verfahren, um die Feinfraktion und/oder den asbesthaltigen Schlamm in einen asbestfreien mineralischen Teil und einen asbesthaltigen Teil zu trennen.

6. Verfahren gemäß Anspruch 5, wobei das Sortieren der Feinfraktion und/oder des asbesthaltigen Schlamms dadurch erfolgt, dass die Feinfraktion und/oder der asbesthaltige Schlamm in eine Flüssigkeit gegeben werden/wird, wobei die Dichte der Flüssigkeit so gewählt ist, dass sich der asbestfreie mineralische Teil von dem asbesthaltigen Teil trennt.

7. Verfahren gemäß Anspruch 6, wobei die Flüssigkeit lodethan C₂H₅I oder Dichlorethan C₂H₄Cl₂ enthält.

8. Verfahren gemäß einem der Ansprüche 5 bis 7, umfassend den weiteren Schritt:
- hydraulisches Binden des asbesthaltigen Teils.

9. Verfahren gemäß einem der Ansprüche 1 bis 8, umfassend den weiteren Schritt:
- hydraulisches Binden der Feinfraktion und/oder des asbesthaltigen Schlamms.

10. Verfahren gemäß einem der Ansprüche 1 bis 9, wobei die Mittelfraktion eine Korngröße von mehr als 0 mm und bis zu 32 mm, bevorzugt von 2 mm bis 8 mm, aufweist.

11. Verfahren gemäß einem der Ansprüche 1 bis 10, wobei das Abbruchmaterial in Bruchstücken vorliegt, die eine maximale Kantenlänge von 80 cm, bevorzugt 40 cm, aufweisen.

12. Verfahren gemäß einem der Ansprüche 1 bis 11, umfassend den folgenden weiteren Schritt, der nach dem Aufbrechen des Abbruchmaterials durchgeführt wird:
- magnetisches Abtrennen (103) von magnetischen Bestandteilen aus dem aufgebrochenen Abbruchmaterial.

13. Verfahren gemäß einem der Ansprüche 1 bis 12, wobei das Nasssortieren mithilfe eines Aufstrom- oder Hub-Senkverfahrens erfolgt.

14. System zur Sanierung und Aufbereitung von Abbruchmaterial, das mineralische und asbesthaltige Bestandteile enthält, umfassend:
- ein Brechgerät (204), das dazu ausgebildet ist, das Abbruchmaterial aufzubrechen, um die mineralischen und asbesthaltigen Bestandteile zu zerteilen;
- ein dem Brechgerät (204) nachgeschaltetes Klassiergerät (206), das dazu ausgebildet ist, das aufgebrochene Abbruchmaterial trocken oder nass zu klassieren, um dieses mindestens in eine Feinfraktion und eine Mittelfraktion zu trennen,
**dadurch gekennzeichnet, dass**
das System zusätzlich Folgendes umfasst:
- ein dem Klassiergerät (206) nachgeschaltetes Sortiergerät (212), das dazu ausgebildet ist, die Mittelfraktion mithilfe eines Nassstroms zu sortieren, um die Mittelfraktion in eine Schwerfraktion, eine Leichtfraktion und asbesthaltigen Schlamm zu trennen,
wobei das Sortiergerät eine Trennkammer aufweist, die Mittel zum Bereitstellen des Nassstroms umfasst, in den die Mittelfraktion zuführbar ist, um mineralische und asbesthaltige Bestandteile der Mittelfraktion der Dichte nach zu trennen und so die Schwerfraktion, die Leichtfraktion und den asbesthaltigen Schlamm zu erhalten, und
wobei entweder die Schwerfraktion asbestfrei mineralisch und die Leichtfraktion asbesthaltig sind, wenn die Dichte der mineralischen Bestandteile der Mittelfraktion höher ist als die Dichte der asbesthaltigen Bestandteile der Mittelfraktion, oder die Schwerfraktion asbesthaltig und die Leichtfraktion asbestfrei mineralisch sind, wenn die Dichte der asbesthaltigen Bestandteile der Mittelfraktion höher ist als die Dichte der mineralischen Bestandteile der Mittelfraktion.

15. System gemäß Anspruch 14, ferner umfassend:
- ein Auftriebbecken (222), das derart ausgebildet ist, eine Flüssigkeit aufzunehmen, um die Feinfraktion und/oder den asbesthaltigen Schlamm durch die Flüssigkeit zu leiten und so die Feinfraktion und/oder den asbesthaltigen Schlamm in einen asbestfreien mineralischen Teil und einen asbesthaltigen mineralischen Teil zu trennen.

## Claims

1. A method for remediating and reconditioning of demolition material containing mineral and asbestos-containing components, the method comprising the following steps:
- crushing (102) the demolition material to break up the mineral and asbestos-containing components;
- dry or wet classifying (104) the crushed demolition material to separate said crushed demolition material into at least a fine fraction and a medium fraction,
**characterized in that**
the method includes the additional step:
- wet sorting (111) the medium fraction to separate said medium fraction into a heavy fraction, a light fraction and asbestos-containing sludge,
wherein, in the step of wet sorting, the medium fraction is fed into a flowing liquid to separate mineral and asbestos-containing components of the medium fraction according to density and thereby to obtain the heavy fraction, the light fraction and the asbestos-containing sludge, and
wherein either the heavy fraction is asbestos-free mineral and the light fraction contains asbestos if the density of the mineral components of the medium fraction is higher than the density of the asbestos-containing components of the medium fraction, or the heavy fraction contains asbestos and the light fraction is asbestos-free mineral if the density of the asbestos-containing components of the medium fraction is higher than the density of the mineral components of the medium fraction.

2. The method according to claim 1, wherein, in the step of dry or wet classifying, the crushed demolition material is additionally separated into a coarse fraction.

3. The method according to claim 2, comprising the further step of:
- crushing the coarse fraction to further break up the mineral and asbestos-containing components contained in the coarse fraction.

4. The method according to claim 3, wherein the coarse fraction is crushed together with further demolition material.

5. The method according to any one of claims 1 to 4, comprising the further step of:
- sorting (121) the fine fraction and/or the asbestos-containing sludge according to a sink-float process to separate the fine fraction and/or the asbestos-containing sludge into an asbestos-free mineral portion and an asbestos-containing portion.

6. The method according to claim 5, wherein the sorting of the fine fraction and/or the asbestos-containing sludge is carried out by feeding the fine fraction and/or the asbestos-containing sludge in a liquid, the density of the liquid being selected such that the asbestos-free mineral portion separates from the asbestos-containing portion.

7. The method according to claim 6, wherein the liquid comprises iodoethane C₂H₅I or dichloroethane C₂H₄Cl₂.

8. The method according to any one of claims 5 to 7, comprising the further step of:
- hydraulic bonding of the asbestos-containing portion.

9. The method according to any one of claims 1 to 8, comprising the further step of:
- hydraulic bonding of the fine fraction and/or the asbestos-containing sludge.

10. The method according to any one of claims 1 to 9, wherein the medium fraction has a grain size of more than 0 mm and up to 32 mm, preferably from 2 mm to 8 mm.

11. The method according to any one of claims 1 to 10, wherein the demolition material is provided in fragments having a maximum edge length of 80 cm, preferably 40 cm.

12. The method according to any one of claims 1 to 11, comprising the following further step performed after the crushing of the demolition material:
- magnetic separating (103) of magnetic components from the crushed demolition material.

13. The method according to any one of claims 1 to 12, wherein the wet sorting is carried out by means of an upflow or lift-lower process.

14. A system for remediating and reconditioning of demolition material containing mineral and asbestos-containing components, comprising:
- a crushing device (204) configured to crush the demolition material to break up the mineral and asbestos-containing components;
- a classifying device (206) provided downstream of the crushing device (204), configured to dry or wet classify the crushed demolition material to separate said crushed demolition material at least into a fine fraction and a medium fraction,
**characterized in that**
the system also includes the following:
- a sorting device (212) provided downstream of the classifying device (206), configured to sort the medium fraction by means of a wet stream to separate the medium fraction into a heavy fraction, a light fraction and asbestos-containing sludge,
wherein the sorting device has a separation chamber comprising means for providing the wet stream into which the medium fraction is feedable to separate mineral and asbestos-containing components of the medium fraction according to density to obtain the heavy fraction, the light fraction and the asbestos-containing sludge, and
wherein either the heavy fraction is asbestos-free mineral and the light fraction contains asbestos if the density of the mineral components of the medium fraction is higher than the density of the asbestos-containing components of the medium fraction, or the heavy fraction contains asbestos and the light fraction is asbestos-free mineral if the density of the asbestos-containing components of the medium fraction is higher than the density of the mineral components of the medium fraction.

15. The system according to claim 14, further comprising:
- a buoyancy basin (222) configured to receive a liquid to pass the fine fraction and/or the asbestos-containing sludge through the liquid and thereby to separate the fine fraction and/or the asbestos-containing sludge into an asbestos-free mineral portion and an asbestos-containing mineral portion.

## Revendications

1. Procédé d'assainissement et de traitement d'un matériau de démolition contenant des composants minéraux et amiantés, le procédé comprenant les étapes suivantes :
- concassage (102) du matériau de démolition afin de diviser les composants minéraux et amiantés ;
- criblage (104) à sec ou humide du matériau de démolition concassé afin de le séparer au moins en une fraction fine et une fraction intermédiaire,
**caractérisé en ce que**
le procédé comprend l'étape supplémentaire suivante :
- tri (111) par voie humide de la fraction intermédiaire afin de la séparer en une fraction lourde, une fraction légère et une boue amiantée,
dans lequel, dans l'étape de tri par voie humide, la fraction intermédiaire est mise dans un liquide en écoulement afin de séparer les composants minéraux et amiantés de la fraction intermédiaire en fonction de la densité et obtenir ainsi la fraction lourde, la fraction légère et la boue amiantée, et
dans lequel soit la fraction lourde est minérale et non amiantée et la fraction légère amiantée lorsque la densité des composants minéraux de la fraction intermédiaire est supérieure à la densité des composants amiantés de la fraction intermédiaire, soit la fraction lourde est minérale et amiantée et la fraction légère est minérale et non amiantée lorsque la densité des composants amiantés de la fraction intermédiaire est supérieure à la densité des composants minéraux de la fraction intermédiaire.

2. Procédé selon la revendication 1, dans lequel le matériau de démolition concassé est en outre séparé en une fraction grossière dans l'étape de criblage à sec ou humide.

3. Procédé selon la revendication 2, comprenant l'étape supplémentaire de :
- concassage de la fraction grossière afin de diviser davantage les composants minéraux et amiantés contenus dans la fraction grossière.

4. Procédé selon la revendication 3, dans lequel la fraction grossière est concassée avec du matériau de démolition supplémentaire.

5. Procédé selon l'une des revendications 1 à 4, comprenant l'étape supplémentaire de :
- tri (121) de la fraction fine et/ou de la boue amiantée selon un procédé de flottation/décantation afin de séparer la fraction fine et/ou la boue amiantée en une partie minérale non amiantée et une partie amiantée.

6. Procédé selon la revendication 5, dans lequel le tri de la fraction fine et/ou de la boue amiantée est réalisé en mettant la fraction fine et/ou la boue amiantée dans un liquide, la densité du liquide étant choisie de manière à ce que la partie minérale non amiantée et la partie amiantée se séparent.

7. Procédé selon la revendication 6, dans lequel le liquide contient de l'iodoéthane C₂H₅I ou du dichloroéthane C₂H₄Cl₂.

8. Procédé selon l'une des revendications 5 à 7, comprenant l'étape supplémentaire de :
- liaison hydraulique de la partie amiantée.

9. Procédé selon l'une des revendications 1 à 8, comprenant l'étape supplémentaire de :
- liaison hydraulique de la fraction fine et/ou de la boue amiantée.

10. Procédé selon l'une des revendications 1 à 9, dans lequel la fraction intermédiaire présente une granulométrie supérieure à 0 mm et inférieure ou égale à 32 mm, de préférence de 2 mm à 8 mm.

11. Procédé selon l'une des revendications 1 à 10, dans lequel le matériau de démolition se présente sous la forme de fragments ayant une longueur d'arête maximale de 80 cm, de préférence de 40 cm.

12. Procédé selon l'une des revendications 1 à 11, comprenant l'étape supplémentaire suivante, réalisée après le concassage du matériau de démolition :
- séparation magnétique (103) des composants magnétiques du matériau de démolition concassé.

13. Procédé selon l'une des revendications 1 à 12, dans lequel le tri par voie humide est effectué à l'aide d'un procédé à courant ascendant ou d'un procédé de levage/abaissement.

14. Système d'assainissement et de traitement d'un matériau de démolition contenant des composants minéraux et amiantés, comprenant :
- un dispositif de concassage (204) qui est conçu pour concasser le matériau de démolition afin de diviser les composants minéraux et amiantés ;
- un dispositif de criblage (206) en aval du dispositif de concassage (204), qui est conçu pour cribler le matériau de démolition concassé à sec ou par voie humide afin de le séparer en au moins une fraction fine et une fraction intermédiaire,
**caractérisé en ce que**
le système comprend en outre :
- un dispositif de tri (212) en aval du dispositif de criblage (206), qui est conçu pour trier la fraction intermédiaire à l'aide d'un courant humide afin de séparer la fraction intermédiaire en une fraction lourde, une fraction légère et une boue amiantée,
dans lequel le dispositif de tri présente une chambre de séparation qui comprend des moyens pour fournir le courant humide dans lequel la fraction intermédiaire peut être introduite pour séparer les composants minéraux et amiantés de la fraction centrale en fonction de la densité, de manière à obtenir la fraction lourde, la fraction légère et la boue amiantée, et
dans lequel soit la fraction lourde est minérale et non amiantée et la fraction légère est amiantée lorsque la densité des composants minéraux de la fraction intermédiaire est supérieure à la densité des composants amiantés de la fraction intermédiaire, soit la fraction lourde est amiantée et la fraction légère est minérale et non amiantée lorsque la densité des composants amiantés de la fraction intermédiaire est supérieure à la densité des composants minéraux de la fraction intermédiaire.

15. Système selon la revendication 14, comprenant en outre :
- une cuve de flottaison (222) qui est conçue pour recevoir un liquide afin de faire passer la fraction fine et/ou la boue amiantée à travers le liquide et ainsi séparer la fraction fine et/ou la boue amiantée en une partie minérale non amiantée et une partie minérale amiantée.
